(19) Europäisches Patentamt
European Patent Office
Office européen des brevets

(11) Veröffentlichungsnummer : **0 138 104**
**B1**

(12) **EUROPÄISCHE PATENTSCHRIFT**

(45) Veröffentlichungstag der Patentschrift : **02.11.89**

(51) Int. Cl.$^4$ : **C 09 B 67/20**, C 09 B 67/18, C 09 D 11/00

(21) Anmeldenummer : **84111350.9**

(22) Anmeldetag : **24.09.84**

(54) **Azopigmentpräparationen.**

(30) Priorität : **04.10.83 DE 3336030**

(43) Veröffentlichungstag der Anmeldung : **24.04.85 Patentblatt 85/17**

(45) Bekanntmachung des Hinweises auf die Patenterteilung : **02.11.89 Patentblatt 89/44**

(84) Benannte Vertragsstaaten : **CH DE FR GB LI**

(56) Entgegenhaltungen :
**EP-A- 0 062 304**
**DE-A- 1 469 740**
**GB-A- 1 156 835**

(73) Patentinhaber : **HOECHST AKTIENGESELLSCHAFT**
**Postfach 80 03 20**
**D-6230 Frankfurt am Main 80 (DE)**

(72) Erfinder : **Wolf, Karl-Heinz, Dr.**
**Paul-Klee-Strasse 77**
**D-5090 Leverkusen 1 (DE)**
Erfinder : **Meyer, Rolf-Volker, Dr.**
**Buchheimer Strasse 23**
**D-4150 Krefeld (DE)**
Erfinder : **Paulat, Volker, Dr.**
**Menzelweg 1**
**D-4019 Monheim (DE)**
Erfinder : **Haus, Artur, Dr.**
**Zum Eschental 8**
**D-5063 Overath (DE)**
Erfinder : **Wegner, Peter, Dr.**
**Geibelstrasse 3**
**D-5090 Leverkusen 1 (DE)**

**EP 0 138 104 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Azopigmentpräparationen sowie ihre Verwendung.

Aus der DE-AS 1 469 782 ist bereits bekannt, daß man bei der Kupplung von Azopigmenten langkettige aliphatische Amine zusetzen kann. Diese Pigmentpräparationen sind zwar in Toluoltiefdruckfarben leicht dispergierbar, haben aber den Nachteil, daß sie beim Druck auf dünne Papiere durchschlagen. Die aus der DE-AS 1 592 872 bekannte Behandlung mit cycloaliphatischen Mono- und Diaminen liefert Produkte mit einer unbefriedigenden Dispergierbarkeit. Die Verwendung einer Kombination aus langkettigen aliphatischen primären Aminen und Diaminen wird in der EP-A1-57 880 beschrieben. Diese Produkte sind jedoch bezüglich Glanz, Lasur und Farbstärke noch nicht zufriedenstellend.

Es wurde nun überraschenderweise gefunden, daß Azopigmentpräparationen, die eine Verbindung der Formeln I-IX enthalten, diese Nachteile nicht besitzen.

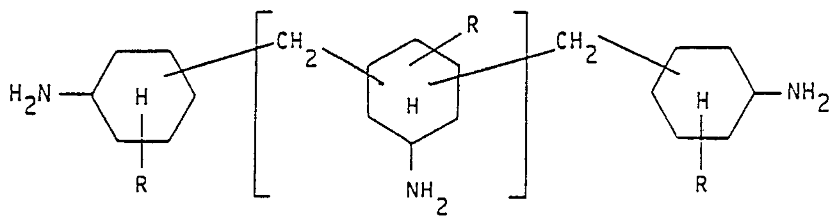

(I)

R = Wasserstoff oder $C_1$-$C_4$-Alkyl, insbesondere Methyl und
X = 1-6 ;

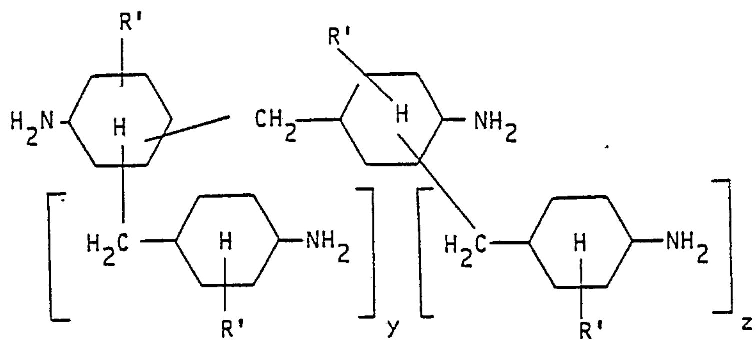

(II)

R' = Wasserstoff oder $C_1$-$C_4$-Alkyl, insbesondere Methyl,
y = 0, 1 oder 2 und z = 0, 1 oder 2, wobei y + z 2 ist ;

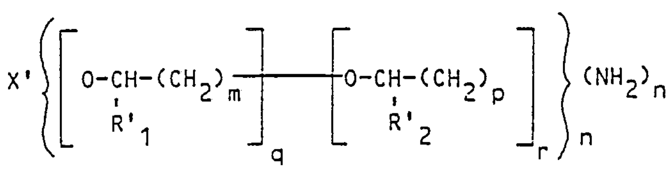

(III)

X' = n-wertiger Rest eines n-wertigen Polyols,
$R'_1$, $R'_2$ = Wasserstoff oder $C_1$-$C_{12}$-Alkyl, vorzugsweise Methyl,
m, p = 1, 2 oder 3, vorzugsweise 1,
q, r = 0-100, vorzugsweise 0-20, wobei
o < q + ≤ 100
n = 3, 4, 5, 6, 7, 8, bevorzugt 3, 4 oder 5 ;

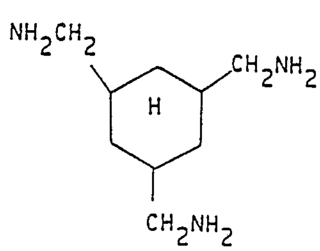

(IV) ;

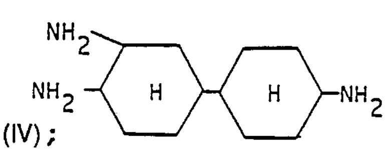

(V)

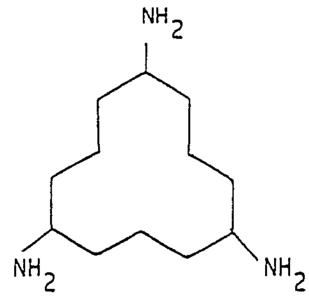 (VI) ; 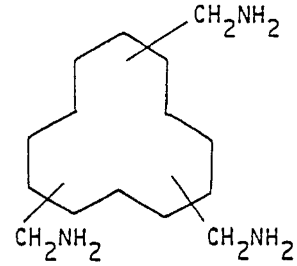 (VII)

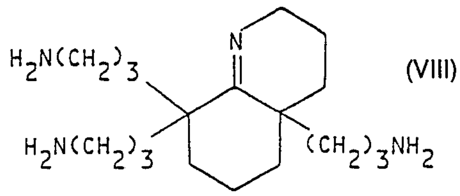 (VIII) ; 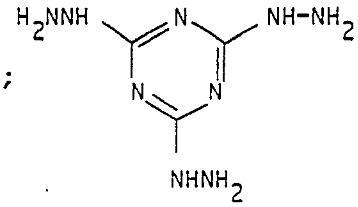 (IX)

Vorzugsweise enthalten die neuen Präparationen zusätzlich eine organische Verbindung mit einer oder zwei primären Aminogruppen.

Darüberhinaus können sie Zusatzstoffe wie sie bei der Pigmentherstellung üblicherweise zugegeben werden oder für ihre Anwendung in Druckfarben oder Lacken übliche Zusatzstoffe enthalten.

Bei den in den neuen Pigmentpräparationen enthaltenen Azopigmenten handelt es sich vorzugsweise um Arylamidpigmente vom Disazotyp wie C.I. Pigment Yellow 12, C.I. Pigment Yellow 13, C.I. Pigment Yellow 14, C.I. Pigment Yellow 16, C.I. Pigment Yellow 17 und C.I. Pigment Yellow 83 sowie Mischkupplungen von Arylamidpigmenten vom Disazotyp wie C.I. Pigment Yellow 106, C.I. Pigment Yellow 114, C.I. Pigment Yellow 126 und C.I. Pigment Yellow 127. C.I. Pigment Yellow 12 kommt vorzugsweise zum Einsatz.

Individuelle Beispiele für erfindungsgemäß einsetzbare Verbindungen sind :

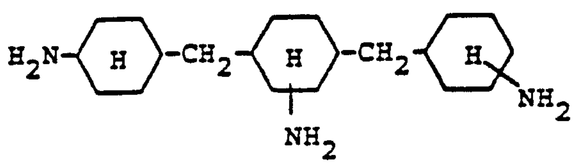 (X)

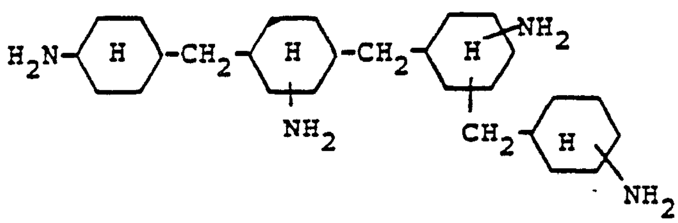 (XI)

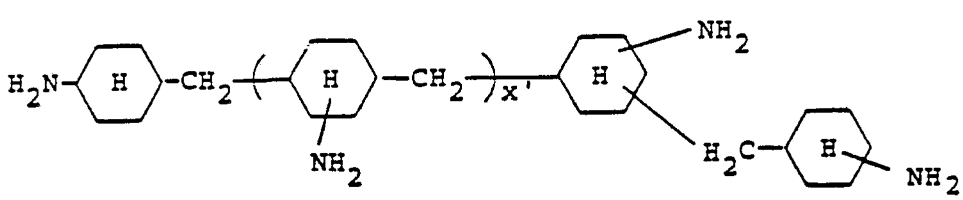 (XII)

Technische Gemische von Verbindungen mit x' = 0-5

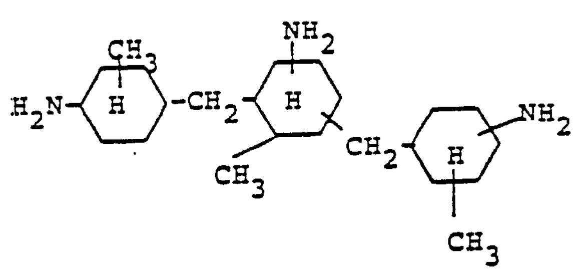 (XIII)

Die erfindungsgemäß eingesetzten organischen Verbindungen mit mindestens drei primären Aminogruppen sind bekannt oder können in Analogie zu literaturbekannten Verfahren hergestellt werden (s. z. B. US-PS 4 321 353 und DE-OS 2 745 172). Allgemeine Herstellungsverfahren für derartige Polyamine sind z. B. :

a) Hydrierung von aromatischen, vorzugsweise mehrkernigen Polyaminen ;

b) Formylierung und anschließende reduktive Aminierung von Polyolefinen ;

c) Umsetzungen geeigneter Reaktanden mit Acrylnitril und Hydrierung der erhaltenen Additionsprodukte ;

d) Aminierung bekannter polyfunktioneller Polyether mit Ammoniak.

Beispiele für Polyetherpolyamine sind solche, hergestellt aus Trimethylolpropan, Glycerin, Pentaerythrit, Sorbit, durch Umsetzung mit Ethylenoxid, Propylenoxid, Tetrahydrofuran, Decen-1-oxid, Dodecen-1-oxid oder Mischungen mit nachträglicher Aminierung. Solche Polyetherpolyamine haben beispielsweise Molgewichte $M_n = 200\text{-}2\,000$. Vorzugsweise werden Polyether aus Trimethylolpropan und Ethylenoxid/Propylenoxid mit Molgewichten $M_n = 500\text{-}1\,500$ in die Aminierung eingesetzt.

Naturgemäß können auch Gemische der vorgenannten Polyamine in die neuen Pigmentpräparationen eingesetzt werden.

Bevorzugt kommen die Amine der Formeln VII, VIII, X, XI und XII einzeln oder in Gemischen zum Einsatz.

Die gegebenenfalls zusätzlich in den neuen Pigmentpräparationen enthaltenen organischen Verbindungen mit einer oder zwei primären Aminogruppen können z. B. folgenden Verbindungsklassen entstammen :

$$R_1 — NH_2 \qquad \text{XIV}$$

wobei $R_1$ einen aliphatischen Kohlenwasserstoffrest mit 6-24 C-Atomen bezeichnet ;

$$R_2NH — R_3 — NH_2 \qquad \text{XV}$$

wobei

$R_2$ einen aliphatischen Kohlenwasserstoffrest mit 6-24 C-Atomen und

$R_3$ eine Alkylengruppe mit 1-6 C-Atomen bezeichnet ;

$$R_4 — NH — R_5 \qquad \text{XVI}$$

wobei

$R_4$ einen 5- oder 6-gliedrigen, gegebenenfalls substituierten cycloaliphatischen Rest und

$R_5$ Wasserstoff, einen 5- oder 6-gliedrigen gegebenenfalls substituierten cycloaliphatischen Rest oder eine gegebenenfalls durch einen $NH_2$-Gruppe substituierte Alkylgruppe mit 2-6 C-Atomen bezeichnet ;

$$H_2N — R_6 — NH_2 \qquad \text{XVII}$$

wobei $R_6$ ein aliphatischer Kohlenwasserstoffrest mit 6-30 C-Atomen ist ;

$$H_2N — (C_nH_{2n} — NH)_m — H \qquad \text{XVIII}$$

wobei

n für 1-6 und

m für 2-8 stehen.

Die Amine der Formeln XIV-XVIII sowie weitere individuelle Beispiele für zusätzlich einsetzbare organische Verbindungen sind z. B. aus DE-OS 1 469 782, DE-OS 1 592 872, DE-OS 3 113 882 sowie EP-A1-57 880 bekannt.

Bevorzugt zum Einsatz kommen organische Verbindungen, die eine primäre Aminogruppe enthalten, insbesondere primäre Amine der Formeln XIV und XV, bei denen $R_1$, $R_2$ aliphatische Reste mit 12-24 C-Atomen und $R_3$ $—CH_2CH_2CH_2—$ bezeichnen ; besonders bevorzugt stehen $R_1$, $R_2$ für Oleyl, Stearyl, den Cocosfett- oder den Talgfettrest.

Weiterhin können die neuen Azopigmentpräparationen Zusatzstoffe, wie sie bei der Pigmentherstellung oder für ihre Anwendung in Druckfarben und Lacken üblich sind, enthalten. Solche Zusatzstoffe sind z. B. anionische, nichtionogene oder kationische Tenside wie Schwefelsäureester von Anlagerungsprodukten des Ethylenoxids an langkettige Alkohole oder Alkylphenole, Anlagerungsprodukte des Ethylenoxids an Alkohole, Amine oder Fettsäuren, Laurylbenzyl-dimethyl-ammoniumchlorid, N-Laurylmethyl-benzimidazolchlorhydrat, Dodecyl-benzyl-dimethylammoniumchlorid.

Weitere Zusatzstoffe speziell für Drucktinten sind z. B. anorganische Füllstoffe wie Schlämmkreide, Kaolin, Bariumsulfat oder Talk.

Die Herstellung der neuen Präparationen ist dadurch gekennzeichnet, daß man die Verbindung der

Formeln I-IX vor, während oder nach der Pigmentkupplung der Reaktionsmischung oder erst dem Pigmentpreßkuchen zusetzt und man gegebenenfalls eine thermische Behandlung durchführt. Weiterhin können die Amine bei einem anschließenden Finishprozeß zugesetzt werden. Die eventuelle Zugabe der weiteren Bestandteile der Präparationen kann in nämlicher Weise erfolgen.

Im einzelnen können die neuen Präparationen z. B. wie folgt hergestellt werden : Man setzt das Amin oder Amingemisch nach dem Kupplungsprozeß zu, stellt alkalisch und erhitzt mehrere Stunden bei 80-100 °C oder im Autoklaven bei 120-150 °C, wobei das Erhitzen im Autoklaven zu einer wesentlich kürzeren Behandlungszeit führt. Man kann aber auch die Kupplungskomponente vor der Kupplung mit den Aminen umsetzen und dann die Kupplung gegebenenfalls unter Zusatz weiterer Amine durchführen. Nach einer anderen bevorzugten Herstellungsmöglichkeit wird der wäßrige Pigmentpreßkuchen mit den Aminen vermischt und anschließend getrocknet, vorzugsweise bei Temperaturen von 120-150 °C. Die Trocknung kann auf Blechen, bevorzugt jedoch im Schaufeltrockner, erfolgen.

Die erfindungsgemäßen Pigmentpräparationen enthalten vorzugsweise 1-30 Gew.-%, besonders bevorzugt 4-15 Gew.-% der Verbindung der Formeln I-IX ; 0-60 Gew.-%, besonders bevorzugt 20-30 Gew.-% einer organischen Verbindung mit einer oder zwei primären Aminogruppen und 90-40 Gew.-%, besonders bevorzugt 50-80 Gew.-% Azopigment, wobei die Summe der Gewichtsprozente dieser drei Bestandteile 100 ist sowie gegebenenfalls Zusatzstoffe.

Die neuen Präparationen finden vorteilhaft Verwendung zur Herstellung von Druckfarben und Lacken, insbesondere von Tiefdruckfarben auf Toluolbasis.

Gegenüber den bekannten Aminpräparationen zeichnen sie sich beim Einsatz in Toluoltiefdruck dadurch aus, daß die Drucke glänzender, lasierender und auf Naturpapier farbstärker sind. Außerdem schlagen die Drucke auf dünnem oder saugfähigem Papier weniger durch.

## Beispiel 1

Eine Mischung aus 5 g Oleylamin, 30 g Talgfett $—NH—CH_2—CH_2—CH_2—NH_2$, 12 g der Verbindung X und 150 ml Wasser wird unter Rühren und Erwärmen homogenisiert und anschließend mit 400 g 25 %igen Preßkuchen von C.I. Pigment Yellow 12 am Schnellrührer verrührt. Die Mischung wird in einem Rotationsverdampfer im Vakuum getrocknet, anschließend — je nach gewünschtem Farbton — ohne Vakuum 4-10 Stunden auf 135-145 °C erhitzt und gemahlen, wobei die längere Erhitzungszeit zu einem röteren Farbton führt. Man erhält eine gelbe Pigmentpräparation. Die damit hergestellten Tiefdruckfarben auf Toluolbasis sind niedrigviskos und ergeben sehr lasierende, glänzende, farbstarke Drucke, die auf saugfähigen oder dünnen Papier nicht durchschlagen.

## Beispiel 2

320 g 3,3′-Dichlor-4,4′-diamino-diphenyl werden mit etwa 2 500 ml Wasser und 525 ml Salzsäure (19,5° Be) verrührt und mit 585 ml 30 volumenprozentiger Natriumnitritlösung (30 g $NaNO_2$ in 100 ml Wasser) bei 0-10 °C tetrazotiert.

460 g Acetoacetylaminobenzol werden in 3 500 ml Wasser und ca. 350 ml 40 volumenprozentiger Natronlauge (40 g NaOH in 100 ml Wasser) gelöst und mit 300 ml Eisessig gefällt. Die Kupplung erfolgt durch langsames Zulaufen der Tetrazoniumsalzlösung, wobei der pH-Wert bei 4,4,5 gehalten wird (evtl. wird Natronlauge zugesetzt). Nach Beendigung der Kupplung wird die Pigmentsuspension mit 91 g einer 50 %igen wäßrigen Lösung von Dodecyl-benzyl-dimethylammoniumchlorid, 46 g Oleylamin, 231 g Talgfettpropylendiamin-1,3 und 70 g der Verbindung X verrührt und eine Stunde auf 90-100 °C erhitzt. Anschließend wird die Mischung durch Zugabe von 40 volumenprozentiger Natronlauge auf pH 9 gestellt, mit weiteren 250 ml 40 volumenprozentiger Natronlauge versetzt und 5 Stunden auf 90-100 °C erhitzt. Die Pigmentpräparation wird abgesaugt, gewaschen, getrocknet, 3 Stunden auf 135 °C erhitzt und gemahlen. Man erhält eine Pigmentpräparation mit den in Beispiel 1 angegebenen Eigenschaften.

## Beispiel 3

Man verfährt wie in Beispiel 2. Oleylamin, Talgfettpropylendiamin und Verbindung X werden vor der Zugabe zur Pigmentsuspension in 1 000 ml Wasser und ca. 145 ml Eisessig gelöst. Nach Einstellen auf pH 9 werden statt 250 ml 380 ml 40 volumenprozentige Natronlauge zugesetzt.

## Beispiel 4

Man verfährt wie in Beispiel 2, als Amin werden 136 g Verbindung X ohne Zusatz von langkettigen aliphatischen Aminen zugesetzt.

## Beispiel 5

Man verfährt wie in den Beispielen 1 bis 3. Statt der Verbindung X werden jeweils folgende Verbindungen eingesetzt :

a) Technisches Gemisch der Formel XII, bestehend aus

70 % der Verbindung mit $x = 0$
18 % der Verbindung mit $x = 1$
12 % der Verbindung mit $x = 2$-5.

b) Verbindung VII
c) Verbindung VIII
Man erhält Pigmentpräparationen mit den in Beispiel 1 beschriebenen Eigenschaften.

Beispiel 6

Man verfährt wie in Beispiel 2, erhitzt die alkalische Pigmentsuspension aber nicht 5 Stunden auf 90-100 °C, sondern 2 Stunden im Autoklav bei 135 °C.
Man erhält Pigmentpräparationen mit den in Beispiel 1 beschriebenen Eigenschaften.

**Patentansprüche**

1. Azopigmentpräparationen enthaltend eine Verbindung der Formeln I-IX :

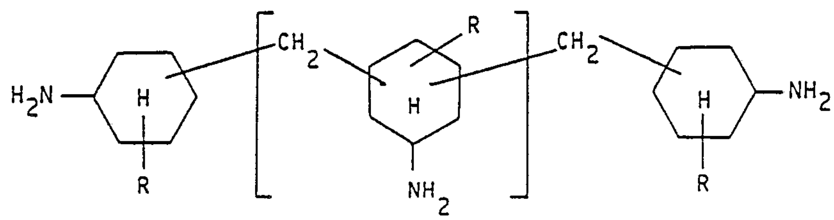

(I)

R = Wasserstoff oder $C_1$-$C_4$-Alkyl und
X = 1-6 ;

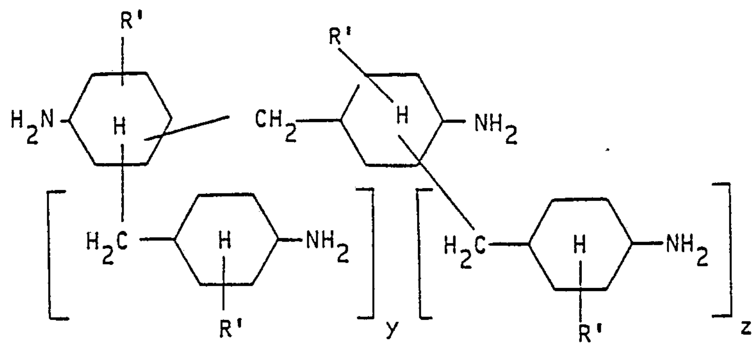

(II)

R' = Wasserstoff oder $C_1$-$C_4$-Alkyl,
$y = 0$, 1 oder 2 und $z = 0$, 1 oder 2, wobei $y + z = 2$ ist ;

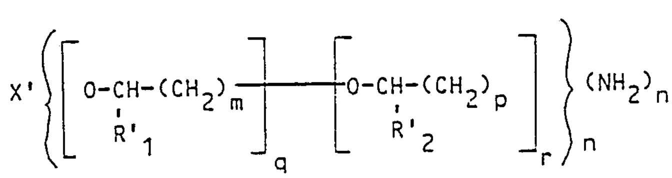

(III)

X' = n-wertiger Rest eines n-wertigen Polyols,
$R'_1$, $R'_2$ = Wasserstoff oder $C_1$-$C_{12}$-Alkyl,
m, p = 1, 2 oder 3,
q, r = 0-100, wobei $0 < q + r \leq 100$ ist und
n = 3, 4, 5, 6, 7, 8 ;

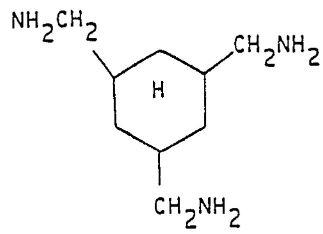
(IV) ;

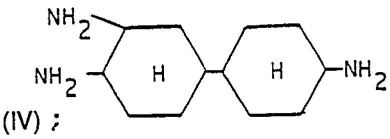
(V)

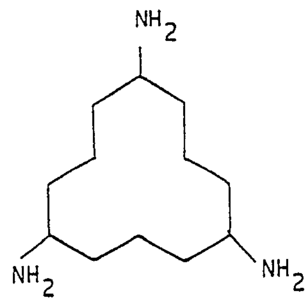
(VI) ;

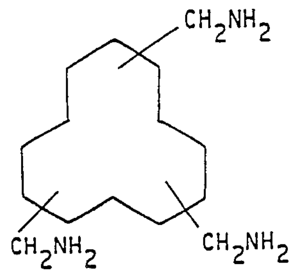
(VII)

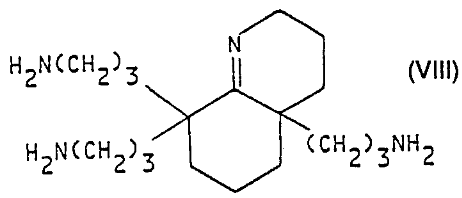
(VIII) ;

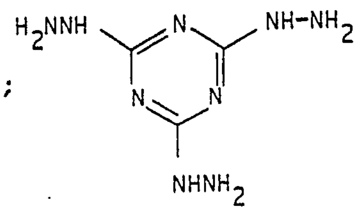
(IX)

2. Präparationen gemäß Anspruch 1 enthaltend als Azopigment ein Arylamidpigment vom Disazotyp.

3. Präparationen gemäß Anspruch 1 enthaltend C.I. Pigment Yellow 12.

4. Präparationen gemäß den Ansprüchen 1-3 enthaltend zusätzlich eine organische Verbindung mit einer oder zwei primären Aminogruppen.

5. Präparationen gemäß den Ansprüchen 1-4 enthaltend zusätzlich ein Amin der Formel

$$R_1 - NH_2$$

und/oder ein Amin der Formel

$$R_2NH - R_3 - NH_2$$

wobei $R_1$, $R_2$ einen aliphatischen Kohlenwasserstoffrest mit 6-24 C-Atomen und $R_3$ eine Alkylengruppe mit 1-6 C-Atomen bezeichnen.

6. Präparationen gemäß den Ansprüchen 1-5 enthaltend zusätzlich Zusatzstoffe wie sie bei der Pigmentherstellung üblicherweise zugegeben werden oder für ihre Anwendung in Druckfarben oder Lacken übliche Zusatzstoffe.

7. Verwendung der Präparationen gemäß den Ansprüchen 1-6 zur Herstellung von Druckfarben und Lacken.

8. Verwendung der Präparationen gemäß den Ansprüchen 1-7 zur Herstellung von Tiefdruckfarben auf Toluolbasis.

## Claims

1. Azo pigment formulations containing a compound of the formulae I-IX :

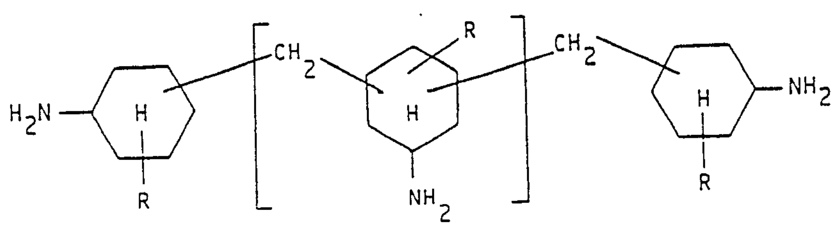
(I)

R is hydrogen or $C_1$-$C_4$-alkyl and
X is 1-6 ;

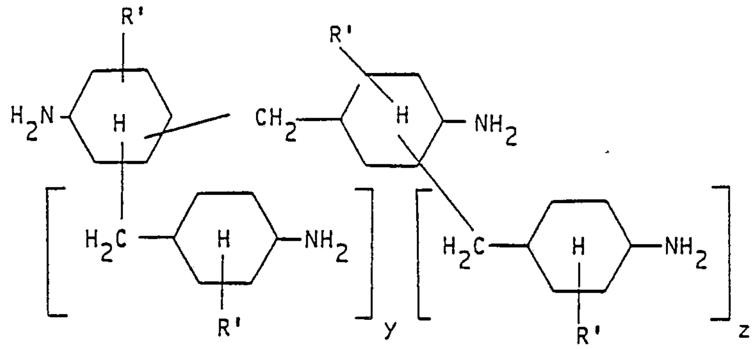

R′ is hydrogen or $C_1$-$C_4$-alkyl,
y is 0, 1 or 2 and z is 0, 1 or 2, y + z being 2 ;

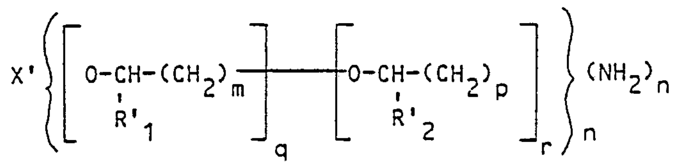

X′ is the n-valent radical of an n-valent polyol,
$R'_1$, $R'_2$ are hydrogen or $C_1$-$C_{12}$-alkyl,
m, p are 1, 2 or 3,
q, r are 0-100, in which $0 \leq q + r < 100$ and
n is 3, 4, 5, 6, 7, 8 ;

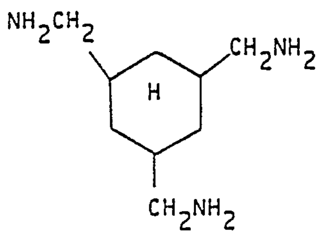

(IV) ;

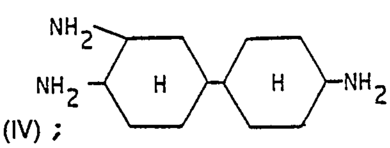

(V)

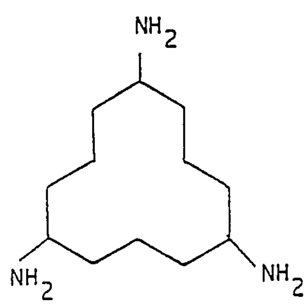

(VI) ;

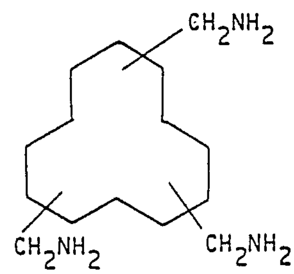

(VII)

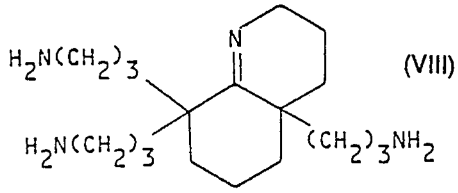

(VIII) ;

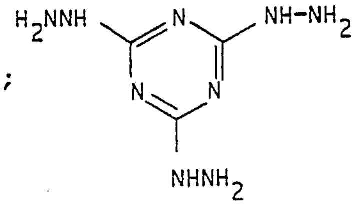

(IX)

2. Formulations according to claim 1 containing an arylamide pigment of the disazo type as azo pigment.

3. Formulations according to claim 1 containing C.I. pigment yellow 12.

4. Formulations according to claims 1-3, additionally containing an organic compound having one or two primary amino groups.

5. Formulations according to claims 1-4, additionally containing an amine of the formula

$$R_1 - NH_2$$

and/or an amine of the formula

$$R_2NH - R_3 - NH_2$$

in which $R_1$, $R_2$ designate an aliphatic hydrocarbon radical having 6-24 carbon atoms and $R_3$ designates an alkylene group having 1-6 carbon atoms.

6. Formulations according to claims 1-5, additionally containing additives such as are customarily added during pigment preparation or additives customary for their use in printing inks or paints.

7. Use of the formulations according to claims 1-6 for the preparation of printing inks and paints.

8. Use of the formulations according to claims 1-7 for the preparation of intaglio printing inks based on toluene.

**Revendications**

1. Compositions de pigments azoïques contenant un composé de formule I à IX :

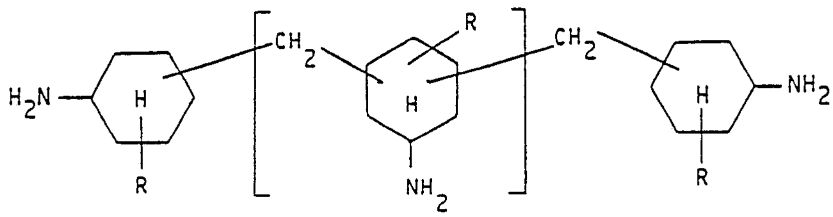

(I)

dans laquelle
R = hydrogène ou alkyle en $C_1$-$C_4$ et
X = 1 à 6 ;

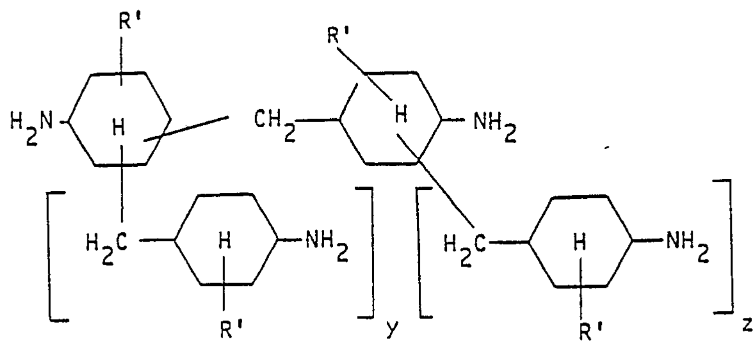

(II)

dans laquelle
R' = hydrogène ou alkyle en $C_1$-$C_4$,
y = 0, 1 ou 2 et
z = 0, 1 ou 2, avec y + z = 2 ;

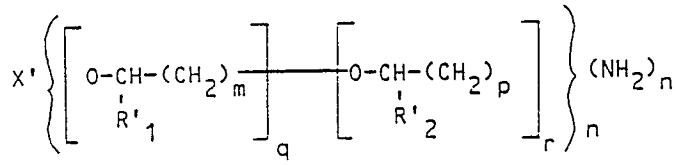

(III)

dans laquelle
X' = radical de valence n d'un polyol de valence n,
$R'_1$, $R'_2$ = hydrogène ou alkyle en $C_1$-$C_{12}$,

m, p = 1, 2 ou 3,
q, r = 0 à 100 avec $0 < q + r \leqslant 100$ et
n = 3, 4, 5, 6, 7, 8 ;

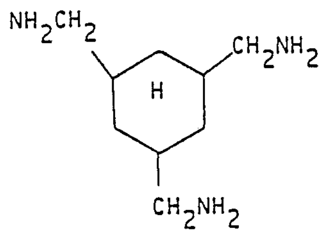
(IV) ;

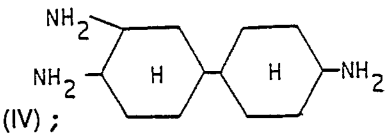
(V)

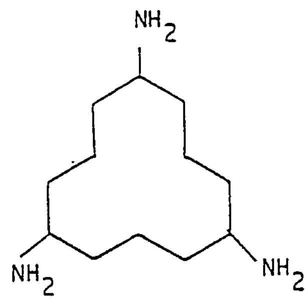
(VI) ;

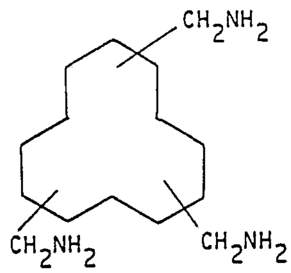
(VII)

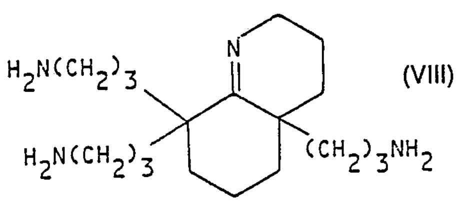
(VIII) ;

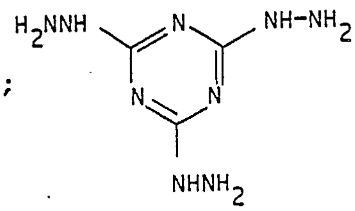
(IX)

2. Compositions selon la revendication 1 contenant en tant que pigment azoïque un pigment d'arylamide au type disazoïque.

3. Compositions selon la revendication 1 contenant le pigment C.I. Pigment Yellow 12.

4. Compositions selon les revendications 1 à 3 contenant en outre un composé organique à un ou deux groupes amino primaires.

5. Compositions selon les revendications 1 à 4 contenant en outre une amine de formule

$$R_1 — NH_2$$

et/ou une amine de formule

$$R_2NH — R_3 — NH_2$$

dans lesquelles $R_1$, $R_2$ = radicaux hydrocarbonés aliphatiques en $C_6$-$C_{24}$ et $R_3$ = groupe alkylène en $C_1$-$C_6$.

6. Compositions selon les revendications 1 à 5 contenant en outre des additifs du type ajouté habituellement à la fabrication de pigments ou des additifs usuels à l'utilisation dans des encres d'impression ou des vernis.

7. Utilisation des compositions selon les revendications 1 à 6 pour la préparation d'encres d'impression et de vernis.

8. Utilisation des compositions selon les revendications 1 à 7 pour la préparation d'encres d'impression typographiques à base de toluène.